# EUROPEAN PATENT APPLICATION

(11) **EP 4 442 499 A1**
(43) Date of publication of application: **09.10.2024**
(21) Application number: 22898755.8
(22) Date of filing: 26.07.2022
(51) Int. Cl.: B60N 2/02, B60N 2/07, F16H 25/10, H02J 50/10, H02J 50/90

(54) **VEHICLE SEAT SLIDING DEVICE**

(30) Priority: 29.11.2021 KR 20210167126
(71) Applicant: DAYOU A-TECH CO., LTD., Gwangsan-gu, Gwangju 62384 (KR)
(72) Inventor: BAE, Ji Sung, Seongnam-si, Gyeonggi-do 13217 (KR); KIM, Tae Seong, Seongnam-si, Gyeonggi-do 13217 (KR); KIM, Sang Hyun, Seongnam-si, Gyeonggi-do 13217 (KR); MOON, Ji Hwan, Seongnam-si, Gyeonggi-do 13217 (KR)
(74) Representative: Witte, Weller & Partner Patentanwälte mbB
(86) International application number: PCT/KR2022/010962
(87) International publication number: WO 2023/096071

(57) **Abstract**

The present invention relates to a vehicle seat sliding device, comprising: rail units mounted on a vehicle body; transfer units which are slidably installed on the rail units and support a seat part; driving units which are connected to the transfer units and generate a driving force so as to slidably move the transfer units; a power supply unit which is mounted on the vehicle body and supplies power; and a wireless transmission unit which wirelessly transmits the power supplied from the power supply unit to the driving units.

## Description

### [Technical Field]

This application claims priority of Korean Patent Application No. 10-2021-0167126, filed on November 29, 2021, in the Korean Intellectual Property Office, the disclosures of which are incorporated herein by reference in its entirety.

The present invention relates to a vehicle seat sliding device, and more specifically, to a vehicle seat sliding device equipped with a wireless power transmission means.

### [Background Art]

In general, a seat of a vehicle includes a seat back and a seat cushion, and slides in a front-rear direction of a vehicle body by a seat sliding device. As the seat sliding device, a device configured to provide a relatively small forward and backward movement distance like a front seat has been widely used, but in recent years, with the spread of RV vehicles and vans having floor panels, whose bodies are relatively longer than passenger cars, research on a long slide device that has a large adjustment range for the forward and backward movement distance of the seat has been actively conducted.

The seat sliding device may be classified into a manual type or an electric type depending on an operating method. An electric seat sliding device includes a fixed rail fixed to the floor panel and two transfer rail that are coupled to slide along the fixed rail and to which a seat cushion is connected, and the transfer rails are driven by a motor. In most cases, since a direct current (DC) electric motor is a driving source, power for driving the motor is supplied from a battery on a vehicle body side through wiring.

However, the power sliding device in the related art has a problem in that the free forward and backward movement of the seat is restricted due to the limitation of the length of the wiring itself and the wiring acts as an obstacle in terms of utilization of a vehicle's interior space.

The background technology of the present invention is disclosed in Republic of Korea Patent Registration No. 10-1598718 (registered on November 28, 2014, title of invention, "Slide device for vehicle seat").

### [Disclosure]

### [Technical Problem]

The present invention is directed to providing a vehicle seat sliding device capable of wirelessly supplying power for sliding operation of a seat.

### [Technical Solution]

In order to solve the aforementioned problems, a vehicle seat sliding device of the present invention includes a rail unit mounted on a vehicle body, a transfer unit slidably installed on the rail unit and configured to support a seat unit, a driving unit connected to the transfer unit and configured to slide the transfer unit by generating a driving force, a power supply unit mounted on the vehicle body and configured to supply power, and a wireless transmission unit configured to wirelessly transmit the power supplied from the power supply unit to the driving unit.

In addition, the wireless transmission unit may include a first conversion unit that converts direct current power supplied from the power supply unit into alternating current power, a transmission module that is connected to the first conversion unit and transmits the alternating current power converted from the first conversion unit, a receiving module that receives the alternating current power transmitted from the transmission module, moves with the transfer unit, and has a variable relative position with respect to the transmission module, and a second conversion unit that converts the alternating current power received from the receiving module into direct current power and transmits the converted direct current power to the driving unit.

In addition, the transmission module may include a transmission body portion that is mounted on one side of the rail unit and extends along a longitudinal direction of the rail unit and a plurality of transmitting coils that are installed in the transmission body portion, are arranged side by side along a longitudinal direction of the transmission body portion, and receive the alternating current power from the first conversion unit.

In addition, the receiving module may include a receiving body portion movably installed between the transmission body portion and the transfer unit and disposed to face the transmission body portion at a predetermined interval apart, a connecting portion extending from the receiving body portion and connected to the transfer unit, and a receiving coil that is installed in the receiving body portion and receives alternating current power transmitted from the transmitting coils through electromagnetic interaction with the transmitting coils.

In addition, a length of the receiving body portion may be shorter than a length of the transmission body portion, and the number of transmitting coils may be greater than the number of receiving coils.

In addition, the vehicle seat sliding device may include a position detection unit configured to detect a relative position of the receiving body portion with respect to the transmission body portion and a supply control unit configured to control alternating current power transmission to each transmitting coil based on data detected from the position detection unit.

In addition, the supply control unit may allow alternating current power to be transmitted to the transmitting coil disposed to face the receiving body portion among the plurality of transmitting coils.

In addition, the transfer unit may include a transfer body disposed inside the rail unit, connected to the seat unit, and moved along a longitudinal direction of the rail unit in conjunction with the driving force of the driving unit and a moving member that is rotatably connected to the transfer body and is in rolling contact with the rail unit to movably support the transfer body.

In addition, the driving unit may include a lead screw disposed inside the rail unit and extending along a longitudinal direction of the rail unit, a driving member disposed to surround the lead screw, connected to the transfer unit, and generating a rotational force by receiving power from the wireless transmission unit, and a nut screw that is provided between the driving member and the lead screw, and causes the driving member to reciprocate in a straight line along a longitudinal direction of the lead screw in conjunction with a rotational force generated from the driving member.

In addition, the driving member may include a BLDC motor.

### [Advantageous Effects]

A vehicle seat sliding device according to the present invention can wirelessly transmit power generated from a power supply unit to a driving unit by a wireless transmission unit, thereby preventing damage to a cable that occurs during the movement of a transfer unit and further expanding a movable range of a seat unit.

In addition, the vehicle seat sliding device according to the present invention can restrict transmission of alternating current power to a transmitting coil through which wireless power transmission is not substantially performed among a plurality of transmitting coils by a position detection unit and a supply control unit, thereby preventing excessive power consumption.

### [Description of Drawings]

FIG. 1 is a perspective view schematically illustrating a configuration of a vehicle seat sliding device according to one embodiment of the present invention.
FIG. 2 is an enlarged perspective view schematically illustrating the configuration of the vehicle seat sliding device according to one embodiment of the present invention.
FIG. 3 is a cross-sectional view schematically illustrating the configuration of the vehicle seat sliding device according to one embodiment of the present invention.
FIG. 4 is a perspective view schematically illustrating a configuration of a rail unit according to one embodiment of the present invention.
FIG. 5 is a perspective view schematically illustrating a configuration of a transfer unit according to one embodiment of the present invention.
FIG. 6 is a front view schematically illustrating the configuration of the transfer unit according to one embodiment of the present invention.
FIG. 7 is an enlarged view schematically illustrating a configuration of a movement prevention unit according to one embodiment of the present invention.
FIG. 8 is a cross-sectional view schematically illustrating an installation state of the movement prevention unit according to one embodiment of the present invention.
FIG. 9 is a perspective view schematically illustrating a configuration of a driving unit according to one embodiment of the present invention.
FIG. 10 is a cross-sectional view schematically illustrating the configuration of the driving unit according to one embodiment of the present invention.
FIG. 11 is a block diagram schematically illustrating a configuration of a wireless transmission unit according to one embodiment of the present invention.
FIG. 12 is a cross-sectional view schematically illustrating the configuration of the wireless transmission unit according to one embodiment of the present invention.
FIG. 13 is a view schematically illustrating a configuration of a position detection unit and a supply control unit according to one embodiment of the present invention.

### [Modes of the Invention]

Hereinafter, an embodiment of a vehicle seat sliding device according to the present invention will be described with reference to the attached drawings.

In the drawings, thicknesses of lines, dimensions of elements, and the like, may be exaggerated for clarity and convenience. Also, terms described below may be defined in consideration of functions in the present disclosure, and may be changed depending on the customary practice or the intention of a user or operator. Thus, definitions of such terms should be determined based on the overall content of the present specification.

In addition, in the present specification, when a part is referred to as being "connected to (or in contact with)" to another part, it includes not only a circumstance when the part is "directly connected (or in direct contact with" to the other part, but also a circumstance when the part is "indirectly connected (or in indirect contact with)" to the other part with another member interposed therebetween. In the present specification, when a part "includes (has)" a component, unless described to the contrary, the term "includes (has)" does not indicate that the part excludes another component but instead indicates that the part may further include (have) the other component.

In addition, the same reference signs may refer to the same components throughout the present specification. Even if the same or similar reference signs are not mentioned or described in a particular drawing, the signs may be described based on other drawings. In addition, even if there are parts that are not indicated by reference signs in a specific drawing, those parts may be described based on other drawings. In addition, the number, shape, size, and relative differences in size of detailed components included in the drawings of the present application are set for convenience of understanding, do not limit the embodiments, and may be implemented in various forms.

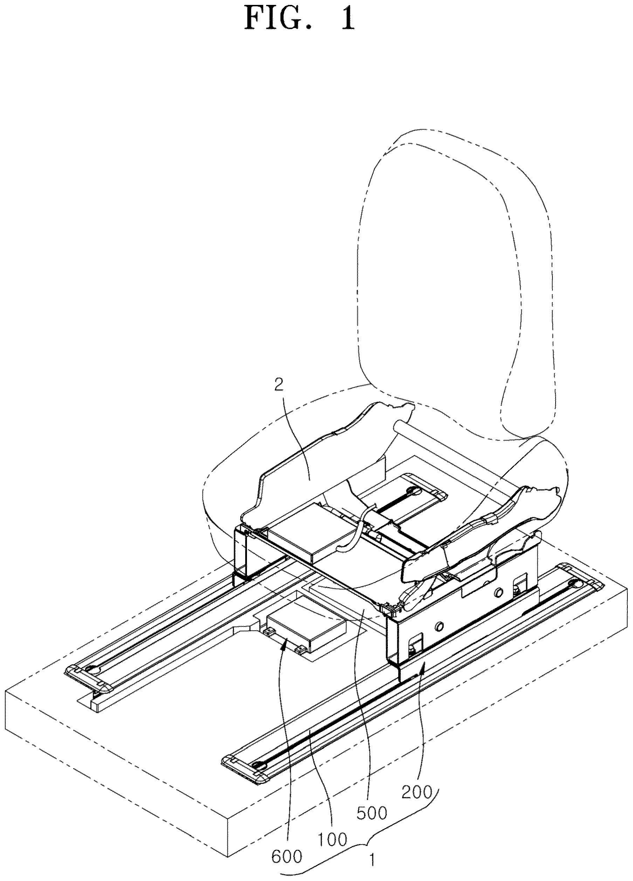

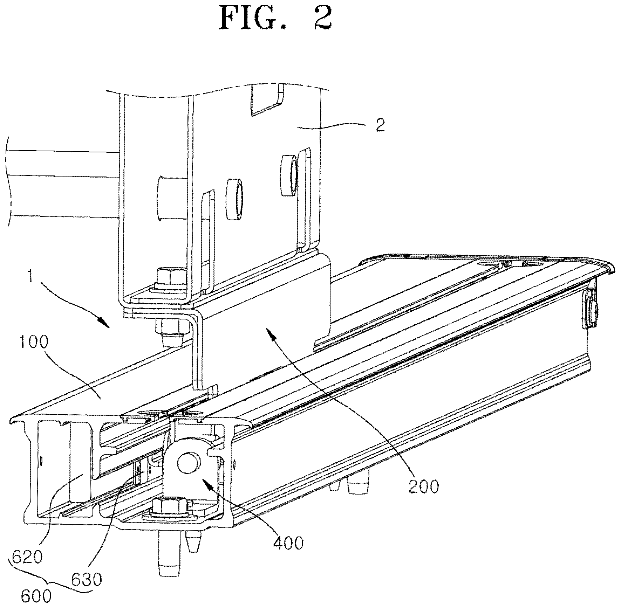

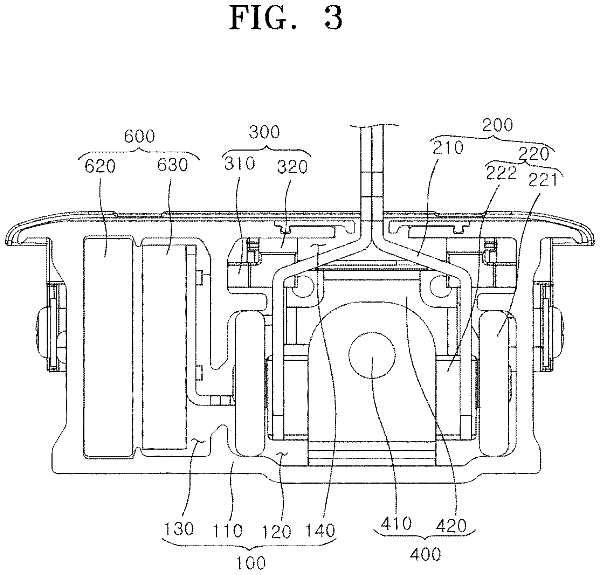

FIG. 1 is a perspective view schematically illustrating a configuration of a vehicle seat sliding device according to one embodiment of the present invention, FIG. 2 is an enlarged perspective view schematically illustrating the configuration of the vehicle seat sliding device according to one embodiment of the present invention, and FIG. 3 is a cross-sectional view schematically illustrating the configuration of the vehicle seat sliding device according to one embodiment of the present invention.

Referring to FIGS. 1 to 3, a vehicle seat sliding device 1 according to one embodiment of the present invention includes a rail unit 100, a transfer unit 200, a movement prevention unit 300, a driving unit 400, a power supply unit 500, and a wireless transmission unit 600.

The rail unit 100 is fixed to a vehicle body and provides a movement path for the transfer unit 200, which will be described below. A pair of rail units 100 may be provided and arranged to be spaced apart at a predetermined interval along a width direction of the vehicle body.

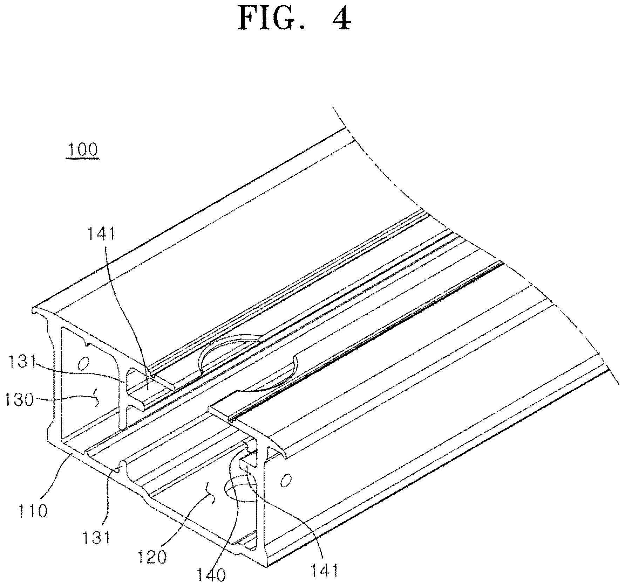

FIG. 4 is a perspective view schematically illustrating a configuration of the rail unit according to one embodiment of the present invention.

Referring to FIGS. 1 to 4, the rail unit 100 according to one embodiment of the present invention includes a rail body 110, a first accommodating portion 120, a second accommodating portion 130, and a third accommodating portion 140.

The rail body 110 forms a rough appearance of the rail unit 100. The rail body 110 is formed to be empty therein to provide a space in which the first accommodating portion 120, the second accommodating portion 130, and the third accommodating portion 140, which will be described below, may be installed. The rail body 110 is embedded inside a vehicle body floor panel disposed below the seat unit 2, and is fixed on the vehicle body floor panel by bolt-coupling or the like. The rail body 110 is formed so that one side is open, and the open side is disposed to face a lower side of the seat unit 2.

The first accommodating portion 120 provides a space in which the transfer unit 200, which will be described below, may be accommodated inside the rail body 110. The first accommodating portion 120 according to one embodiment of the present invention may be formed to have the shape of a hole that passes horizontally through the interior of the rail body 110. The first accommodating portion 120 extends so that a longitudinal direction thereof is parallel to a longitudinal direction of the rail body 110. The size of a cross-sectional area of the first accommodating portion 120 may be changed in various ways depending on the size of the transfer unit 200, which will be described below.

The second accommodating portion 130 is disposed to be spaced apart from the first accommodating portion 120, and provides a space in which the wireless transmission unit 600, which will be described below, may be accommodated inside the rail body 110. The second accommodating portion 130 according to one embodiment of the present invention may be formed to have the shape of a hole that passes horizontally through the interior of the rail body 110. The second accommodating portion 130 extends so that a longitudinal direction thereof is parallel to a longitudinal direction of the rail body 110. The second accommodating portion 130 is disposed to be spaced apart from the first accommodating portion 120 at a predetermined interval in a width direction of the rail body 110. For example, as illustrated in FIG. 3, the first accommodating portion 120 and the second accommodating portion 130 may be disposed on both left and right sides of the rail body 110, respectively. In this case, the second accommodating portion 130 may be partitioned from the first accommodating portion 120 inside the rail body 110 by a pair of first partition walls 131. The pair of first partition walls 131 extend from upper and lower sides of the rail body 110, respectively, along a height direction of the rail body 110. The pair of first partition walls 131 may be disposed so that their ends are spaced apart from each other at a predetermined interval. The second accommodating portion 130 communicates with the first accommodating portion 120 through a space between the pair of first partition walls 131.

The third accommodating portion 140 provides a space in which the movement prevention unit 300, which will be described below, may be accommodated inside the rail body 110. The third accommodating portion 140 according to one embodiment of the present invention may be formed to have the shape of a hole that passes horizontally through the interior of the rail body 110. The third accommodating portion 140 extends so that a longitudinal direction thereof is parallel to the longitudinal direction of the rail body 110. The third accommodating portion 140 is disposed to be spaced apart from the first accommodating portion 120 at a predetermined interval in the height direction of the rail body 110. For example, as illustrated in FIG. 3, the third accommodating portion 140 and the first accommodating portion 120 may be disposed on both upper and lower sides of the rail body 110, respectively. In this case, the third accommodating portion 140 may be partitioned from the first accommodating portion 120 inside the rail body 110 by a pair of second partition walls 141. The pair of second partition walls 132 extend along the width direction of the rail body 110 from the inner surface of the rail body 110 and the first partition wall 131 extending from the upper side of the rail body 110, respectively. The pair of second partition walls 141 may be disposed so that their ends are spaced apart from each other at a predetermined interval. The third accommodating portion 140 communicates with the first accommodating portion 120 through a space between the pair of second partition walls 141.

The transfer unit 200 is slidably installed on the rail unit 100 and supports the seat unit 2. The transfer unit 200 slidingly reciprocates back and forth along a longitudinal direction of the rail unit 100 by a driving force of the driving unit 400, which will be described below, to change the position of the seat unit 2. A pair of transfer units 200 may be provided to be slidably installed on the pair of rail units 100, respectively.

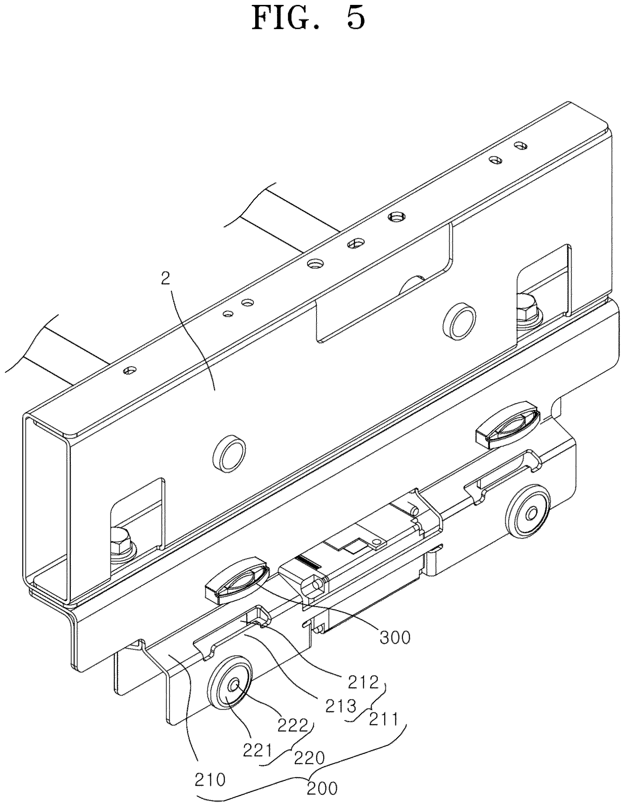

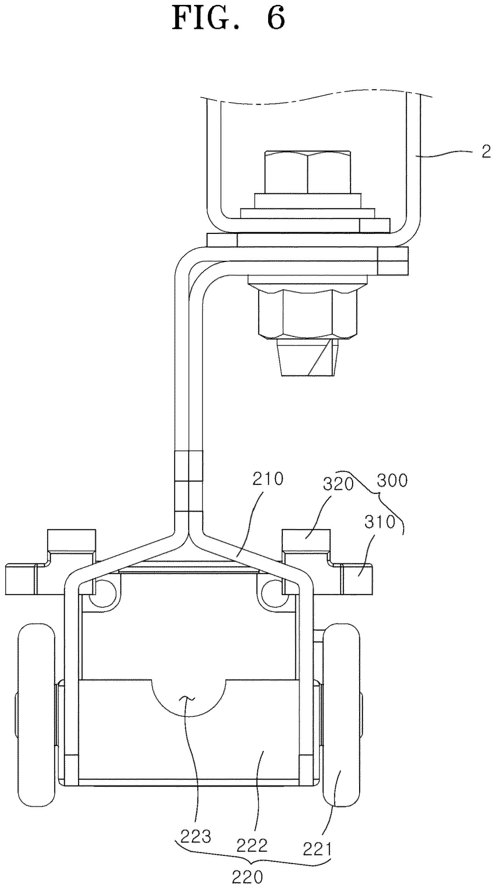

FIG. 5 is a perspective view schematically illustrating a configuration of the transfer unit according to one embodiment of the present invention, and FIG. 6 is a front view schematically illustrating the configuration of the transfer unit according to one embodiment of the present invention.

Referring to FIGS. 1 to 6, the transfer unit 200 according to one embodiment of the present invention includes a transfer body 210 and a moving member 220.

The transfer body 210 forms a schematic appearance of the transfer unit 200 and is disposed inside the rail unit 100. The transfer body 210 according to one embodiment of the present invention is formed to have the shape of an approximately "U"-shaped bracket and is disposed inside the first accommodating portion 120. A width of the transfer body 210 is narrower than a width of the first accommodating portion 120. The transfer body 210 is disposed with an open side thereof facing a bottom surface of the rail body 110. An upper end of the transfer body 210 protrudes upward from the rail unit 100 through the open side of the rail unit 100. The upper end of the transfer body 210 is integrally connected to the lower side of the seat unit 2 by bolt-coupling or the like. A driving member 420 of the driving unit 400, which will be described below, is disposed inside the transfer body 210, and the transfer body 210 is integrally connected to the driving member 420 by bolt-coupling or the like. Accordingly, the transfer body 210 may slidingly reciprocate along the longitudinal direction of the rail unit 100 inside the first accommodating portion 120 together with the driving member 420 when the driving unit 400 is operated.

The transfer body 210 is provided with a mounting portion 211 on which the movement prevention unit 300, which will be described below, is installed. A plurality of mounting portions 211 are provided and symmetrically disposed on both sides of the transfer body 210. The plurality of mounting portions 211 may be disposed to be spaced apart at predetermined intervals along a longitudinal direction of the transfer body 210. The mounting portion 211 according to one embodiment of the present invention may include a mounting hole 212 formed through the transfer body 210 and a mounting protrusion 213 protruding upward from a lower edge of the mounting hole 212.

The moving member 220 is rotatably connected to the transfer body 210 and is in rolling contact with the rail unit 100 to movably support the transfer body 210 with respect to the rail unit 100. A plurality of moving members 220 may be provided and disposed to be spaced apart at predetermined intervals along the longitudinal direction of the transfer body 210.

The moving member 220 according to one embodiment of the present invention includes a wheel 221, a shaft 222, and an interference prevention portion 223.

The wheel 221 may be formed to have an approximately circular wheel shape. A pair of wheels 221 are provided and are disposed on both left and right sides of the transfer body 210, respectively. The pair of wheels 221 are disposed so that their central axes are located on the same axis. A lower end of the wheel 221 protrudes from a lower end of the transfer body 210. The lower end of the wheel 221 is in rolling contact with the bottom surface of the rail body 110 when the transfer body 210 is accommodated inside the first accommodating portion 120.

The shaft 222 rotatably supports the pair of wheels 221. The shaft 222 is disposed inside the transfer body 210 and extends so that a longitudinal direction thereof is parallel to a width direction of the transfer body 210. Both ends of the shaft 222 pass through the transfer body 210 and protrude to both left and right sides of the transfer body 210. The shaft 222 may be integrally connected to the transfer body 210 by welding or the like. The both ends of the shaft 222 are connected to the pair of wheels 221, respectively. In this case, the pair of wheels 221 may be rotatably connected to the both ends of the shaft 222 through a caulking process. The shaft 222 may be formed to have a quadrilateral cross-sectional shape to reduce the occurrence of clearance during the caulking process of the wheel 221.

The interference prevention portion 223 is provided on the shaft 222 and prevents the shaft 222 from interfering with the driving unit 400. More specifically, the interference prevention portion 223 provides a space through which a lead screw 410, which will be described below, may pass on one side of the shaft 222. The interference prevention portion 223 according to one embodiment of the present invention may be formed to have the shape of a groove that is concavely depressed downward from an upper side of the shaft 222. The interference prevention portion 223 may be formed to have a cross-section of approximately a semicircular shape.

The movement prevention unit 300 is connected to the transfer unit 200 and comes into contact with the rail unit 100 to prevent the transfer unit from moving inside the rail unit 100. A plurality of movement prevention units 300 may be provided to be symmetrically disposed on both sides of the transfer unit 200, more specifically, the transfer body 210. The plurality of movement prevention units 300 may be disposed to be spaced apart at predetermined intervals along the longitudinal direction of the transfer body 210.

The movement prevention unit 300 according to one embodiment may be disposed inside the third accommodating portion 140 and supported by being mounted on the mounting portion 211 provided on the transfer body 210. More specifically, in a state in which the movement prevention unit 300 is inserted into the mounting hole 212, a lower surface thereof is insertion-coupled to the mounting protrusion 213, so that the movement prevention unit 300 may be supported inside the third accommodating portion 140.

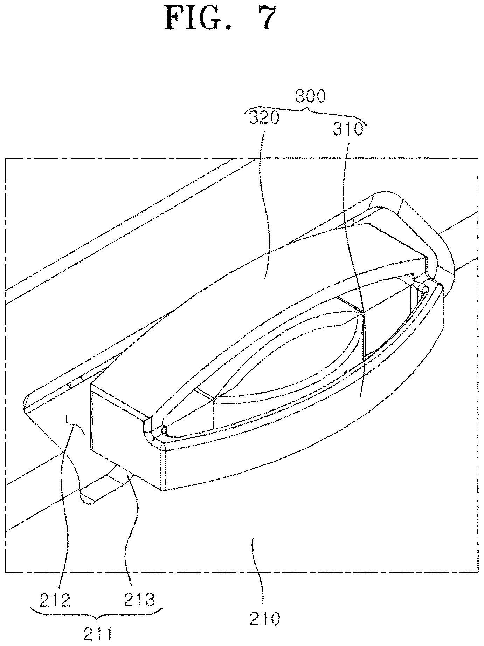

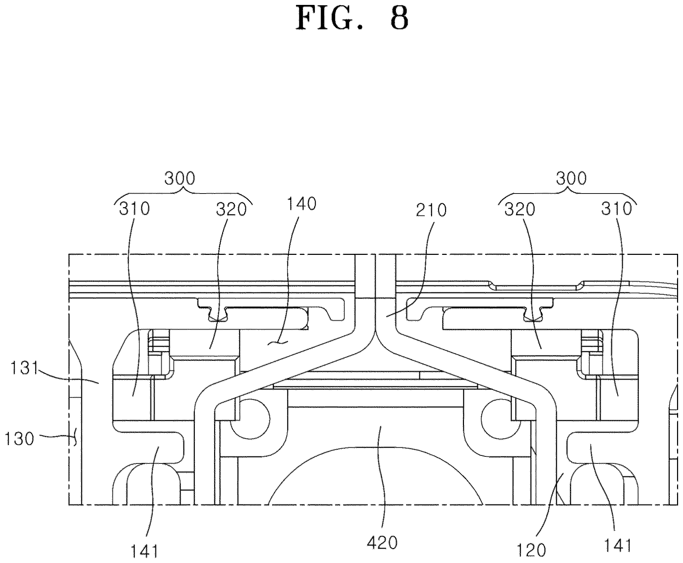

FIG. 7 is an enlarged view schematically illustrating a configuration of the movement prevention unit according to one embodiment of the present invention, and FIG. 8 is a cross-sectional view schematically illustrating an installation state of the movement prevention unit according to one embodiment of the present invention.

Referring to FIGS. 7 and 8, the movement prevention unit 300 according to one embodiment of the present invention includes a first movement prevention member 310 and a second movement prevention member 320.

The first movement prevention member 310 forms an appearance of one side of the movement prevention unit 300 and is in contact with one side of the rail unit 100 to prevent the transfer unit 200 from moving in left and right directions. The first movement prevention member 310 according to one embodiment of the present invention is formed to have a substantially arc-shaped cross-sectional shape so that the first movement prevention member 310 protrudes horizontally from the mounting portion 211 toward the width direction of the rail unit 100. The first movement prevention member 310 provided in the movement prevention unit 300 disposed on one side (right side based on FIG. 8) based on the transfer body 210 is supported by an end surface thereof being in contact with the inner surface of the first partition wall 131. The first movement prevention member 310 provided in the movement prevention unit 300 disposed on the other side (left side based on FIG. 8) based on the transfer body 210 is supported by an end surface thereof being in contact with the inner surface of the rail body 110. The first movement prevention member 310 may be provided to be elastically deformable. Accordingly, when the transfer unit 200 moves in the left and right directions inside the rail unit 100, the first movement prevention member 310 may position the transfer unit 200 in a correct position by elastic deformation.

The second movement prevention member 320 forms an appearance of the other side of the movement prevention unit 300 and is in contact with the other side of the rail unit 100 to prevent the transfer unit 200 from moving in up and down directions. The second movement prevention member 320 according to one embodiment of the present invention is formed to have a substantially arc-shaped cross-sectional shape so that the second movement prevention member 320 protrudes vertically from the mounting portion 211 toward the open side of the rail unit 100, that is, upward. The second movement prevention member 320 is supported by an end surface thereof being in contact with an upper inner surface of the rail body 110. The second movement prevention member 320 may be provided to be elastically deformable. Accordingly, when the transfer unit 200 moves in the up and down directions inside the rail unit 100, the second movement prevention member 320 may position the transfer unit 200 in a correct position by elastic deformation.

The driving unit 400 is connected to the transfer unit 200 and slides the transfer unit 200 along the longitudinal direction of the rail unit 100 by generating a driving force. The driving unit 400 may generate the driving force by receiving power supplied from the power supply unit 500 through the wireless transmission unit 600, which will be described below.

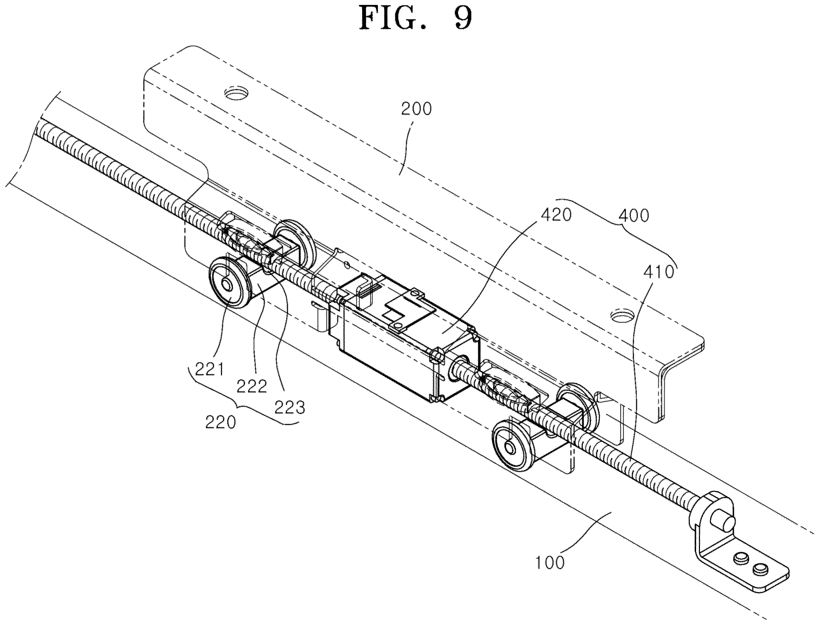

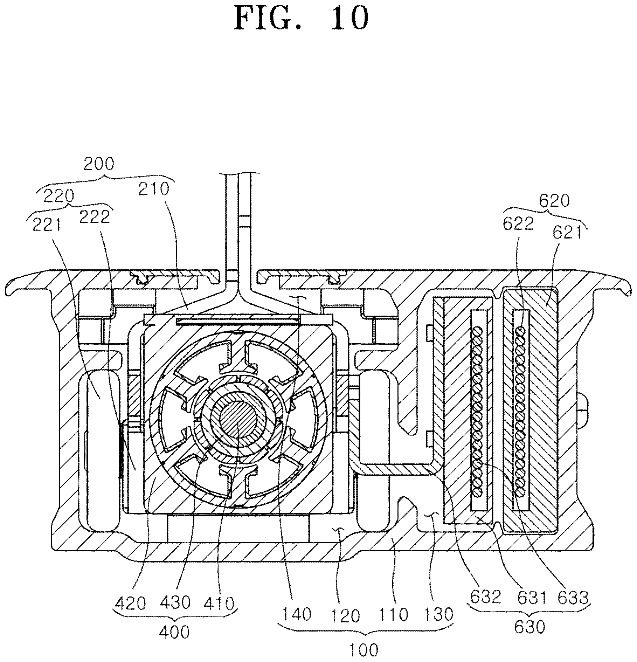

FIG. 9 is a perspective view schematically illustrating a configuration of the driving unit according to one embodiment of the present invention, and FIG. 10 is a cross-sectional view schematically illustrating the configuration of the driving unit according to one embodiment of the present invention.

Referring to FIGS. 9 and 10, the driving unit 400 according to one embodiment of the present invention includes a lead screw 410, a driving member 420, and a nut screw 430.

The lead screw 410 is disposed inside the rail unit 100 and extends along the longitudinal direction of the rail unit 100. The lead screw 410 according to one embodiment of the present invention may be formed to have the shape of a bolt screw in which threads extend on an outer peripheral surface in a spiral manner along a longitudinal direction. The lead screw 410 is installed inside the first accommodating portion 120, and disposed so that a longitudinal direction thereof is parallel to the longitudinal direction of the rail unit 100. The lead screw 410 is disposed to be spaced apart from the bottom surface of the rail body 110 by a predetermined interval. The lead screw 410 may be supported by separate brackets whose both ends are respectively bolt-coupled to the rail body 110. In this case, the lead screw 410 is fixed so as not to rotate about a central axis. Some sections of the lead screw 410 are disposed inside the transfer body 210. In this case, the lead screw 410 may be prevented from interfering with the shaft 222 by the interference prevention portion 223 that is concavely depressed downward from the upper side of the shaft 222.

The driving member 420 is disposed to surround the lead screw 410, and generates a rotational force by receiving power from the wireless transmission unit 600, which will be described below. The driving member 420 is connected to the lead screw 410 via the nut screw 430, which will be described below. As the driving member 420 generates the rotational force, the driving member 420 reciprocates in a straight line along the longitudinal direction of the lead screw 410. In this case, a direction in which the driving member 420 moves in a straight line may change depending on a direction of the rotational force generated from the driving member 420.

The driving member 420 is integrally connected to the transfer unit 200. More specifically, the driving member 420 may be disposed inside the transfer body 210 and fixed to the inner surface of the transfer body 210 by bolt-coupling or the like. Accordingly, the driving member 420 may slide the transfer unit 200 on the rail unit 100 while reciprocating in a straight line along the longitudinal direction of the lead screw 410.

The driving member 420 according to one embodiment of the present invention may include a hollow BLDC motor including a stator and a rotor to generate a rotational driving force and an electronic control unit for controlling the operation of the BLDC motor according to a user's operation on a seat switch.

The nut screw 430 is provided between the driving member 420 and the lead screw 410, and causes the driving member 420 to reciprocate in a straight line along the longitudinal direction of the lead screw 410 in conjunction with the rotational force generated from the driving member 420. The nut screw 430 according to one embodiment of the present invention may be formed to have a hollow cylindrical shape with threads on an inner peripheral surface. The nut screw 430 is inserted and fixed to an inner peripheral surface of the driving member 420, that is, an inner peripheral surface of the rotor of the BLDC motor. The nut screw 430 is screw-coupled to an outer peripheral surface of the lead screw 410 via threads provided on the inner peripheral surface. Accordingly, the nut screw 430 may move the driving member 420 in a straight line along the longitudinal direction of the lead screw 410 by being rotated about the central axis by the rotational force generated from the driving member 420.

The power supply unit 500 is mounted on the vehicle body and is provided to supply power. The power supply unit 500 according to one embodiment of the present invention may be exemplified by various types of batteries capable of supplying direct current power. The power supply unit 500 may be disposed between a pair of rail units 100 and may be embedded inside the vehicle body floor panel and supported.

The wireless transmission unit 600 wirelessly transmits power supplied from the power supply unit 500 to the driving unit 400. More specifically, the wireless transmission unit 600 is provided to wirelessly transmit power supplied from the power supply unit 500 to the driving unit 400 through an inductive coupling method or magnetic resonance method based on the electromagnetic induction phenomenon. Accordingly, the wireless transmission unit 600 may prevent damage to a cable that occurs during the movement of the transfer unit 200 as the existing power supply is made by wire, and may expand the movable range of the seat unit 2.

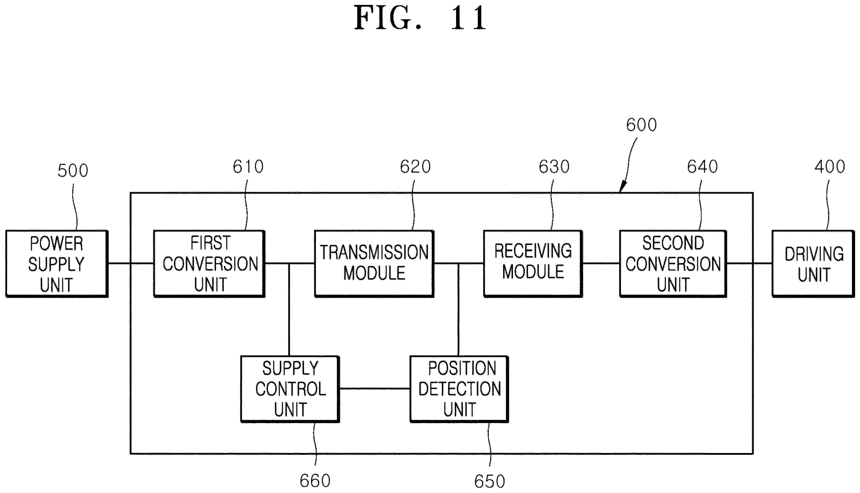

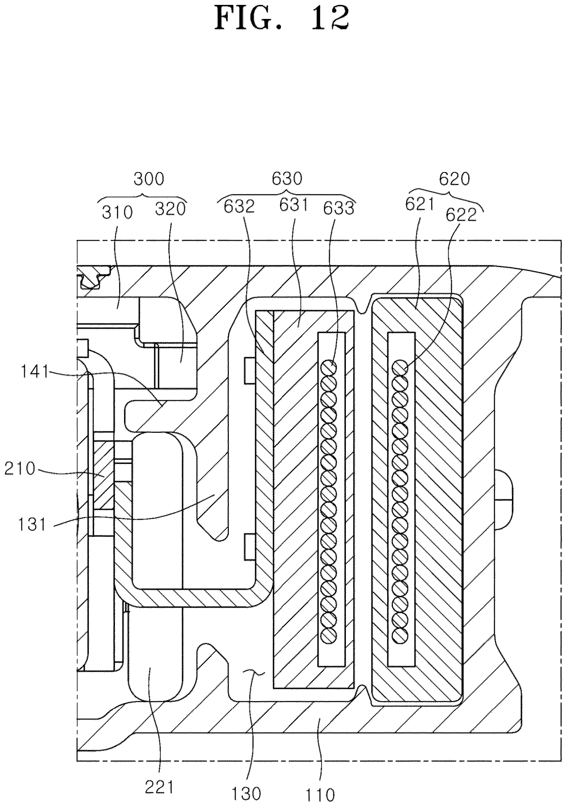

FIG. 11 is a block diagram schematically illustrating a configuration of the wireless transmission unit according to one embodiment of the present invention, and FIG. 12 is a cross-sectional view schematically illustrating the configuration of the wireless transmission unit according to one embodiment of the present invention.

Referring to FIGS. 1, 11, and 12, the wireless transmission unit 600 according to one embodiment of the present invention includes a first conversion unit 610, a transmission module 620, a receiving module 630, a second conversion unit 640, a position detection unit 650, and a supply control unit 660.

The first conversion unit 610 converts direct current power supplied from the power supply unit 500 into alternating current power. The first conversion unit 610 according to one embodiment of the present invention may be electrically connected to the power supply unit 500, may be exemplified by various types of inverters capable of converting the direct current power supplied from the power supply unit 500 into alternating current power and transmitting the converted alternating current power to the transmission module 620, which will be described below. The first conversion unit 610 may be disposed between the pair of rail units 100, and may be embedded in the vehicle body floor panel and supported.

The transmission module 620 is connected to the first conversion unit 610 and transmits the alternating current power converted from the first conversion unit 610. More specifically, the transmission module 620 wirelessly transmits the alternating current power received from the first conversion unit 610 through an inductive coupling method or magnetic resonance method based on the electromagnetic induction phenomenon with the receiving module 630, which will be described below.

The transmission module 620 according to one embodiment of the present invention includes a transmission body portion 621 and a transmitting coil 622.

The transmission body portion 621 forms a schematic appearance of the transmission module 620 and is mounted on one side of the rail unit 100. The transmission body portion 621 according to one embodiment of the present invention may be disposed inside the second accommodating portion 130 by being formed to have a substantially rectangular cross-sectional shape. The transmission body portion 621 extends along the longitudinal direction of the rail unit 100. The transmission body portion 621 is disposed to horizontally face one side (the right side in FIG. 12) of the transfer body 210. The transmission body portion 621 is formed to be empty therein to provide a space in which the transmitting coil 622, which will be described below, may be installed. The transmission body portion 621 may be bolt-coupled to the rail body 110 to be fixed in a position inside the second accommodating portion 130.

The transmitting coils 622 are installed in the transmission body portion 621 and receive the alternating current power from the first conversion unit 610. A plurality of transmitting coils 622 may be provided and disposed side by side along a longitudinal direction of the transmission body portion 621. The transmitting coil 622 according to one embodiment of the present invention may be a flat coil in which a conductive member having a certain length is wound a plurality of times in a clockwise or counterclockwise direction. In this case, the transmitting coil 622 may be formed to have any one of a circular shape, an oval shape, a square shape, and a combined shape thereof. Central axes of the plurality of transmitting coils 622 are disposed parallel to the width direction of the rail unit 100. The plurality of transmitting coils 622 may be disposed on a sheet (not illustrated) made of a magnetic material such as ferrite or the like. The number of transmitting coils 622 may be greater than the number of receiving coils 633, which will be described below. The plurality of transmitting coils 622 may individually receive the alternating current power from the first conversion unit 610. Accordingly, the transmitting coils 622 may independently limit or allow transmission of the alternating current power by the supply control unit 660, which will be described below.

In addition, the transmission module 620 according to one embodiment of the present invention may be configured to further include a full bridge circuit.

The receiving module 630 is disposed to be spaced apart from the transmission module 620 and receives alternating current power wirelessly transmitted from the transmission module 620. The receiving module 630 moves together with the transfer unit 200 and the relative position thereof with respect to the transmission module 620 is changed.

The receiving module 630 according to one embodiment of the present invention includes a receiving body portion 631, a connecting portion 632, and a receiving coil 633.

The receiving body portion 631 is movably installed between the transmission body portion 621 and the transfer unit 200, and is disposed to face the transmission body portion 621 at a predetermined interval apart. The receiving body portion 631 according to one embodiment of the present invention may be disposed inside the second accommodating portion 130 by being formed to have a substantially rectangular cross-sectional shape. The receiving body portion 631 is disposed between the transmission body portion 621 and the transfer body 210, and is disposed to face the transmission body portion 621 in parallel to the transmission body portion 621 at a position spaced apart from the transmission body portion 621 by a predetermined distance. The receiving body portion 631 extends along the longitudinal direction of the rail unit 100. The length of the receiving body portion 631 may be shorter than the length of the transmission body portion 621. The transmission body portion 621 is formed to be empty therein to provide a space in which the receiving coil 633, which will be described below, may be installed. The receiving body portion 631 is installed to be slidable along the longitudinal direction of the rail unit 100 inside the second accommodating portion 130. In this case, the receiving body portion 631 may be movably supported inside the second accommodating portion 130 by the connecting portion 632, which will be described below.

The connecting portion 632 extends from the receiving body portion 631 and is connected to the transfer unit 200. The connecting portion 632 according to one embodiment of the present invention may be formed to have a cross-section of an approximately "U" shape. The connecting portion 632 has a central portion passing between ends of the pair of first partition walls 131, and both sides thereof are disposed inside the first accommodating portion 120 and the second accommodating portion 130, respectively. The connecting portion 632 is supported by both sides being coupled to the surfaces of the receiving body portion 631 and the transfer body 210 facing each other by bolt-coupling or the like. The connecting portion 632 slides the receiving body portion 631 inside the second accommodating portion 130 as the transfer unit 200 slides in the longitudinal direction of the rail unit 100.

The receiving coil 633 is installed in the receiving body portion 631 and wirelessly receives the alternating current power transmitted from the transmitting coil 622 through electromagnetic interaction with the transmitting coil 622. The receiving coil 633 according to one embodiment of the present invention may be a flat coil in which a conductive member having a certain length is wound a plurality of times in a clockwise or counterclockwise direction. In this case, the receiving coil 633 may be formed to have any one of a circular shape, an oval shape, a square shape, and a combined shape thereof. The specific number of the receiving coil 633 is not limited to any one, and the design thereof may be changed in various ways within a range smaller than the number of transmitting coils 622 depending on the length of the receiving body portion 631 or the like. A central axis of the receiving coil 633 is disposed parallel to the width direction of the rail unit 100. The receiving coil 633 may be disposed on a sheet (not illustrated) of a magnetic material such as ferrite or the like.

In addition, the receiving module 630 according to one embodiment of the present invention may be configured to further include a rectifier circuit.

The second conversion unit 640 converts the alternating current power received from the receiving module 630 into direct current power. The second conversion unit 640 transmits the converted direct current power to the driving unit 400, more specifically, to the electronic control unit of the driving member 420. The second conversion unit 640 according to one embodiment of the present invention may be exemplified by various types of converters capable of converting the alternating current power received from the receiving module 630 into direct current power and transmitting the converted direct current power to the driving unit 400. The second conversion unit 640 may be connected to the receiving module 630 via a flexible flat cable (FFC) whose shape may be freely changed depending on layout conditions or the like. The second conversion unit 640 The second conversion unit 640 may be moved together with the seat unit 2 by being installed on a lower frame of the seat unit 2.

The position detection unit 650 detects a relative position of the receiving body portion 631 with respect to the transmission body portion 621.

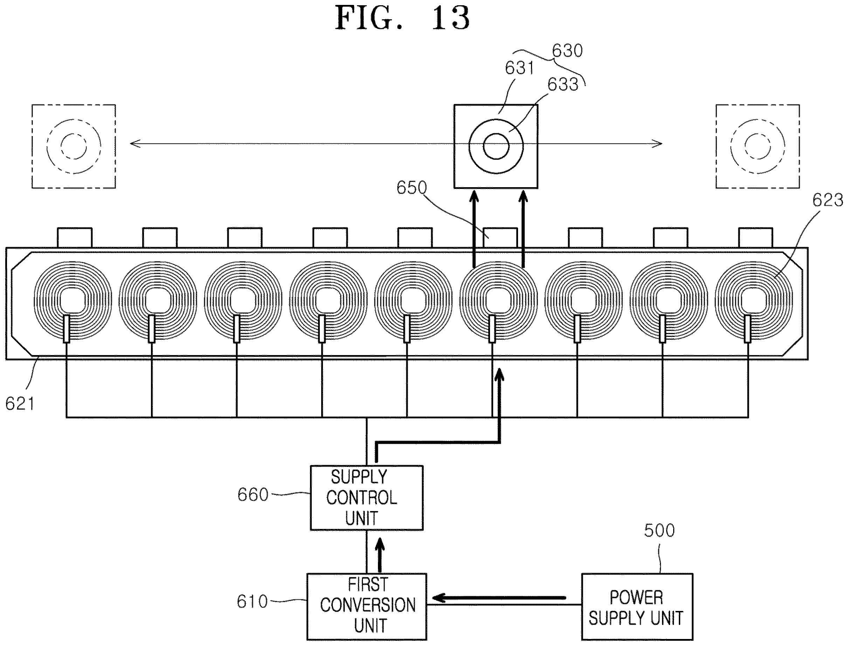

FIG. 13 is a view schematically illustrating a configuration of the position detection unit and the supply control unit according to one embodiment of the present invention.

Referring to FIG. 13, the position detection unit 650 according to one embodiment of the present invention may be exemplified by various types of position sensors such as optical sensors and ultrasonic sensors. A number of position detection units 650 corresponding to the plurality of transmitting coils 622 are provided, and may be individually installed at positions adjacent to the plurality of transmitting coils 622. In this case, the design of the positions adjacent to the transmitting coils 622 may be changed in various ways within a range of positions where the relative position of the receiving body portion 631 with respect to the transmission body portion 621 may be detected, such as between the transmission body portion 621 and the receiving body portion 631, etc. The position detection unit 650 may be supported by being directly coupled to the transmission body portion 621, or may also be supported at a position spaced apart from the transmission body portion 621 by a separate fixing means.

The supply control unit 660 controls alternate current power transmission to each transmitting coil 622 based on data detected from the position detection unit 650. More specifically, when the position of the receiving body portion 631 is changed due to movement of the transfer unit 200, the supply control unit 660 allows alternating current power to be transmitted to a transmitting coil 622 disposed to face the receiving body portion 631 among the plurality of transmitting coils 622, and blocks transmission of alternating current power to the remaining transmitting coils 622. Accordingly, the supply control unit 660 may prevent excessive power consumption by restricting the transmission of alternating current power to the transmitting coils 622 by which wireless power transmission is not substantially performed. The supply control unit 660 according to one embodiment of the present invention may include a switch module capable of independently controlling alternating current transmission to each transmitting coil 622, and a switch control unit for receiving data about a positional state of the receiving body portion 631 from the position detection unit 650 and controlling the operation of the switch module. The supply control unit 660 may be installed inside the first conversion unit 610, and may also be separately installed on a path through which power is supplied from the first conversion unit 610 to the transmitting coils 622.

Hereinafter, an operating process of the vehicle seat sliding device 1 according to one embodiment of the present invention will be described in detail.

Referring to FIGS. 1 to 13, the direct current power generated from the power supply unit 500 is converted into alternating current power by the first conversion unit 610 and the converted alternating current power is transmitted to the transmitting coils 622.

The AC power transmitted to the transmitting coil 622 is wirelessly transmitted to a receiving coil 623 by an inductive coupling method or a magnetic resonance method based on the electromagnetic induction phenomenon with the receiving coil 623.

The alternating current power transmitted to the receiving coil 623 is converted back into direct current power by the second conversion unit 640 and the converted direct current power is transmitted to the driving unit 400, more specifically, to the electronic control unit of the driving member 420.

Then, as the user operates the seat switch, the driving member 420 generates a rotational force through power received from the wireless transmission unit 600.

The nut screw 430 screw-coupled to the lead screw 410 is rotated about the central axis by the rotational force generated from the driving member 420, and moves the driving member 420 in a straight line along the longitudinal direction of the lead screw 410.

As the driving member 420 moves in a straight line along the longitudinal direction of the lead screw 410, the transfer unit 200 integrally connected to the driving member 420 adjusts the position of the seat unit 2 while sliding along the longitudinal direction of the rail unit 100.

In the process in which the transfer unit 200 slides along the longitudinal direction of the rail unit 100, the receiving module 630 integrally connected to the transfer unit 200 is relatively moved with respect to the transmission module 620.

As the receiving body portion 631 is disposed to face any one among the plurality of transmitting coils 622, the position detection unit 650 installed at a position adjacent to the corresponding transmitting coil 622 detects the position of the receiving body portion 631.

The supply control unit 660 receives data about the position of the receiving body portion 631 detected from the position detection unit 650, and controls alternate current power transmission to each transmitting coil 622.

More specifically, the supply control unit 660 allows the alternating current power converted from the first conversion unit 610 to be transmitted to the transmitting coil 622 disposed to face the receiving body portion 631 and blocks transmission to the remaining transmitting coils 622.

Although the present invention has been described with reference to the embodiments illustrated in the drawings, it is merely exemplary, and it is to be understood to those skilled in the art that various modifications and equivalent other embodiments could be made therefrom.

Therefore, the technical protection scope of the present invention should be defined only by the claims.

## Claims

1. A vehicle seat sliding device comprising:
a rail unit mounted on a vehicle body;
a transfer unit slidably installed on the rail unit and configured to support a seat unit;
a driving unit connected to the transfer unit and configured to slide the transfer unit by generating a driving force;
a power supply unit mounted on the vehicle body and configured to supply power; and
a wireless transmission unit configured to wirelessly transmit the power supplied from the power supply unit to the driving unit.

2. The vehicle seat sliding device of claim 1, wherein the wireless transmission unit includes:
a first conversion unit that converts direct current power supplied from the power supply unit into alternating current power;
a transmission module that is connected to the first conversion unit and transmits the alternating current power converted from the first conversion unit;
a receiving module that receives the alternating current power transmitted from the transmission module, moves with the transfer unit, and has a variable relative position with respect to the transmission module; and
a second conversion unit that converts the alternating current power received from the receiving module into direct current power and transmits the converted direct current power to the driving unit.

3. The vehicle seat sliding device of claim 2, wherein the transmission module includes:
a transmission body portion that is mounted on one side of the rail unit and extends along a longitudinal direction of the rail unit; and
a plurality of transmitting coils that are installed in the transmission body portion, are arranged side by side along a longitudinal direction of the transmission body portion, and receive the alternating current power from the first conversion unit.

4. The vehicle seat sliding device of claim 3, wherein the receiving module includes:
a receiving body portion movably installed between the transmission body portion and the transfer unit and disposed to face the transmission body portion at a predetermined interval apart;
a connecting portion extending from the receiving body portion and connected to the transfer unit; and
a receiving coil that is installed in the receiving body portion and receives alternating current power transmitted from the transmitting coils through electromagnetic interaction with the transmitting coils.

5. The vehicle seat sliding device of claim 4, wherein a length of the receiving body portion is shorter than a length of the transmission body portion, and the number of transmitting coils is greater than the number of receiving coils.

6. The vehicle seat sliding device of claim 4, comprising:
a position detection unit configured to detect a relative position of the receiving body portion with respect to the transmission body portion; and
a supply control unit configured to control alternating current power transmission to each transmitting coil based on data detected from the position detection unit.

7. The vehicle seat sliding device of claim 6, wherein the supply control unit allows alternating current power to be transmitted to the transmitting coil disposed to face the receiving body portion among the plurality of transmitting coils.

8. The vehicle seat sliding device of claim 1, wherein the transfer unit includes:
a transfer body disposed inside the rail unit, connected to the seat unit, and moved along a longitudinal direction of the rail unit in conjunction with the driving force of the driving unit; and
a moving member that is rotatably connected to the transfer body and is in rolling contact with the rail unit to movably support the transfer body.

9. The vehicle seat sliding device of claim 1, wherein the driving unit includes:
a lead screw disposed inside the rail unit and extending along a longitudinal direction of the rail unit;
a driving member that is disposed to surround the lead screw, is connected to the transfer unit, and generates a rotational force by receiving power from the wireless transmission unit; and
a nut screw that is provided between the driving member and the lead screw, and causes the driving member to reciprocate in a straight line along a longitudinal direction of the lead screw in conjunction with the rotational force generated from the driving member.

10. The vehicle seat sliding device of claim 9, wherein the driving member includes a brushless BLDC motor.
